# EUROPEAN PATENT SPECIFICATION

(11) **EP 2 028 886 B1**
(45) Date of publication and mention of the grant of the patent: **04.08.2010**
(21) Application number: 07016297.9
(22) Date of filing: 20.08.2007
(51) Int. Cl.: H04W 4/00

(54) **Methods and devices which enable to determine if a handover of a communication in which a mobile terminal is involved has to be executed from a first base station to a second base station**
Verfahren und Vorrichtungen zur Ermöglichung der Bestimmung, ob die Weiterreichung einer Kommunikation, in der ein mobiles Endgerät beteiligt ist, von der ersten Basisstation zur zweiten Basisstation ausgeführt werden muss
Procédés et dispositifs qui permettent de déterminer si un transfert de communication dans lequel est impliqué un terminal mobile doit être exécuté depuis une première station de base vers une deuxième station de base

(43) Date of publication of application: 25.02.2009
(73) Proprietor: Mitsubishi Electric R&D Centre Europe B.V., 1119 NS Schiphol Rijk (NL); MITSUBISHI ELECTRIC CORPORATION, Chiyoda-ku Tokyo 100-8310 (JP)
(72) Inventor: Voyer, Nicolas, 35708 Rennes Cedex 7 (FR); Bonneville, Hervé, 35708 Rennes Cedex 7 (FR)
(74) Representative: Maillet, Alain

(56) References cited:
- US-A- 5 887 256

## Description

The present invention relates to methods and devices, which enable to determine if a handover of a communication, in which a mobile terminal is involved, has to be executed from a first base station to a second base station.

Classical wireless cellular telecommunication networks are composed of numerous base stations which cover individually one or multiple cells.

A cell is an area where a reference signal broadcasted by one base station is received above a given threshold.

Neighbour cells of base stations have different identifiers. Each base station broadcasts the identifier of the cell it manages so as to avoid any ambiguity of the origin of the signals when a mobile terminal detects signals transferred by different base stations.

When a mobile terminal moves from one cell to another cell, it can then measure the signal of the other cell, read the identifier of the cell, and informs the network about this. When a mobile terminal reports these signals, a handover of the communication, in which the mobile terminal is involved, may be required between the base station which is currently serving the mobile terminal and another base station. The base station which is currently serving the mobile terminal sends then a handover request command to the other base station.

Each mobile terminal needs to be identified in the wireless cellular telecommunication network.

The IMSI of a mobile terminal enables to identify univocally a mobile terminal. The IMSI is stored in the Subscriber Identity Module (SIM) inside the mobile terminal and is sent by the mobile terminal to the wireless cellular telecommunication network. In order to avoid the mobile terminal being identified and tracked by eavesdroppers on the radio interface, the IMSI is sent as rarely as possible and a randomly generated TMSI is sent instead.

The TMSI, allocated to a mobile terminal, changes and is a temporary identifier. It is then not possible to use it as a key in order to decide or not if the mobile terminal can use the resource of the base station without consulting an entity of the network which memorises links between the IMSI and the TMSI of the mobile terminal. This entity is called a mobility management entity.

Such procedure takes some time and may not be adapted for handover procedures which need to be executed promptly.

The patent US 5887256 discloses a system wherein location update request may contain TMSI.

The aim of the invention is therefore to propose methods and devices, which enable to determine if a handover of a communication, in which a mobile terminal is involved, has to be executed from a first base station to a second base station.

To that end, the present invention concerns a method for determining if a handover of a communication, in which a first mobile terminal is involved, has to be executed from a first base station to a second base station of a wireless cellular telecommunication network, characterised in that the method comprises the steps executed by the second base station of:
- receiving a first message requesting to hand over the communication in which the first mobile terminal is involved from the first base station to the second base station, the message comprising a temporary identifier allocated to the first mobile terminal,
- checking if the temporary identifier comprised in the first message is comprised in a list of temporary identifiers of mobile terminals for which the handover of communications in which they are involved is authorised, the list of temporary identifiers of mobile terminals for which the handover of communications in which they are involved is authorised being of temporary identifiers of mobile terminals for which a call establishment through the second base station has already been allowed,
- transferring a second message to the first base station, the second message being representative of an agreement for executing the handover of the communication if the temporary identifier comprised in the first message is comprised in the list of temporary identifiers or the second message being representative of a refusal for executing the handover of the communication if the temporary identifier comprised in the first message is not comprised in a list of temporary identifiers.

The present invention concerns also a device for determining if a handover of a communication in which a first mobile terminal is involved has to be executed from a first base station to a second base station of a wireless cellular telecommunication network **characterised in that** the device is included in the second base station and the device comprises:
- means for receiving a first message requesting to hand over the communication, in which the first mobile terminal is involved, from the first base station to the second base station, the message comprising a temporary identifier allocated to the first mobile terminal,
- means for checking if the temporary identifier comprised in the first message is comprised in a list of temporary identifiers of mobile terminals for which the handover of communications in which they are involved is authorised, the list of temporary identifiers of mobile terminals for which the handover of communications in which they are involved is authorised being of temporary identifiers of mobile terminals for which a call establishment through the second base station has already been allowed,
- means for transferring a second message to the first base station, the second message being representative of an agreement for executing the handover of the communication if the temporary identifier comprised in the first message is comprised in the list of temporary identifiers or the second message being representative of a refusal for executing the handover of the communication if the temporary identifier comprised in the first message is not comprised in a list of temporary identifiers.

Thus, the second base station can early refuse the handover for undesired mobile terminals. It will not trigger expensive signalling procedures with other entities of the wireless cellular telecommunication network in order to check if the mobile terminal has access rights.

Thus, the mobile terminals which have established a communication successfully can handover to the base station.

Delays involved by the signalling procedures and exchange of messages with the base station and other entities of the wireless cellular telecommunication network are less critical during a call establishment than during a handover procedure.

According to a particular feature, the second base station:
- receives from a second mobile terminal a third message requesting an establishment of a communication with a remote telecommunication device through the second base station, the third message comprising a temporary identifier allocated to the second mobile terminal,
- checks if the establishment of the communication is authorised by an entity of the wireless cellular telecommunication network,
- inserts the identifier of the second mobile terminal in the list of temporary identifiers of mobile terminals if the establishment of the communication is authorised.

Thus the mobile terminals, which have established a communication successfully, can handover to the base station. Delays involved by the signalling procedures and exchange of messages with the base station and other entities of the wireless cellular telecommunication network are less critical during a call establishment than during a handover procedure.

According to a particular feature, the second base station:
- receives from the entity a fourth message comprising another list of temporary identifiers of mobile terminals,
- replaces the list of temporary identifiers of mobile terminals by the other list of temporary identifiers of mobile terminals comprised in the fourth message.

Thus, the second base station can keep an updated list of temporary identifiers, even if the temporary identifiers have been modified.

According to a particular feature, the second base station:
- receives from the entity a fourth message comprising at least one pair of temporary identifiers of mobile terminals,
- replaces in the list of temporary identifiers of mobile terminals, each temporary identifier that corresponds to the first element of a pair by the second element of the pair.

Thus, the second base station can keep an updated list of temporary identifiers, even if the temporary identifiers have been modified.

According to a particular feature, the second base station:
- receives from the entity a fourth message comprising at least one command and at least one temporary identifier,
- adds in the list of temporary identifiers of mobile terminals or suppresses from the list of temporary identifiers of mobile terminals, the at least one temporary identifier comprised in the fourth message according to the at least one command.

Thus, the second base station can update the list of temporary identifiers, even if the temporary identifiers have been modified.

According to a particular feature, the second base station memorises a list of univocal identifiers of mobile terminals and the second base station:
- transfers a fifth message to the entity comprising the list of univocal identifiers of mobile terminals,
- receives in response to the fifth message a sixth message comprising a list of temporary identifiers allocated to the mobile terminals of which univocal identifiers are comprised in the fifth message.

Thus, the second base station can update the list of temporary identifiers, even if the temporary identifiers have been modified.

The present invention concerns also a method for enabling the determination, if a handover of a communication in which a first mobile terminal is involved has to be executed between base stations in an area managed by an entity of a wireless cellular telecommunication network, characterised in that the method comprises the steps executed by the entity of:
- allocating a temporary identifier to the first mobile terminal,
- obtaining a list of base stations through which a communication of the first mobile terminal has been authorized to go through,
- transferring, to each base station identified in the list of base stations a first message comprising at least the temporary identifier of the first mobile terminal.

The present invention concerns also a device for enabling the determination, if a handover of a communication in which a first mobile terminal is involved has to be executed between base stations in an area managed by an entity of a wireless cellular telecommunication network, characterised in that the device is included in the entity and comprises:
- means for allocating a temporary identifier to the first mobile terminal,
- means for obtaining a list of base stations through which a communication of the first mobile terminal has been authorized to go through,
- means for transferring, to each base station identified in the list of base stations a first message comprising at least the temporary identifier of the first mobile terminal.

Thus, each base station is informed of the latest assigned temporary identifier of mobile terminals which have passed a communication through it. When the mobile terminal will move away and back to the cell of the base station, any handover request will be accepted, even though no communication was previously passed through the base station with the newly assigned temporary identifier.

According to a particular feature, the entity:
- receives, from a base station, a second message requesting an establishment through the base station of a communication of the first mobile terminal is involved, the second message comprising a temporary identifier allocated to the first mobile terminal,
- accepts the establishment of the communication through the base station,
- modifies the list of base stations through which a communication of the first mobile terminal has been authorized to go through.

According to a particular feature, the entity memorises, for each base station, a list of univocal identifiers of mobile terminals for which the handover, from another base station to the base station, of communications in which the mobile terminals are involved is authorised, and the entity transfers a third message to the base station when the list of univocal identifiers of mobile terminals is modified, the third message comprising a list of temporary identifiers of mobile terminals for which the handover of communications from another base station to the base station in which they are involved is authorised.

Thus, the base station is informed of any mobile terminal which has access to the resource of the base station.

According to a particular feature, the list of univocal identifiers of mobile terminals for which the handover from another base station to the base station of communication in which the mobile terminals are involved is authorised and each temporary identifier of a mobile terminal in the list comprised in the third message has a position in the list comprised in the third message which is different from the position of the univocal identifier of the mobile terminal in the received list of univocal identifiers.

Thus, as order is different between the list of temporary identifiers and the list of univocal identifiers, the base station, or an eavesdropper, can not guess the association between a univocal identifier and the temporary identifier of a given mobile terminal. Provided that the size of the lists is higher than one, it will be more difficult to determine where each mobile terminal is effectively located.

According to still another aspect, the present invention concerns computer programs which can be directly loadable into a programmable device, comprising instructions or portions of code for implementing the steps of the methods according to the invention, when said computer programs are executed on a programmable device.

Since the features and advantages, related to the computer programs, are the same as those set out above related to the methods and devices according to the invention, they will not be repeated here.

The characteristics of the invention will emerge more clearly from a reading of the following description of an example embodiment, the said description being produced with reference to the accompanying drawings, among which:
Fig. 1 is a diagram representing the architecture of a wireless cellular telecommunication network in which the present invention is implemented;
Fig. 2 is a block diagram of a base station according to the present invention;
Fig. 3 is a block diagram of a mobility management entity according to the present invention;
Fig. 4 depicts an algorithm executed by each base station according to the present invention;
Fig. 5 depicts an algorithm executed by the mobility management entity according to the present invention.

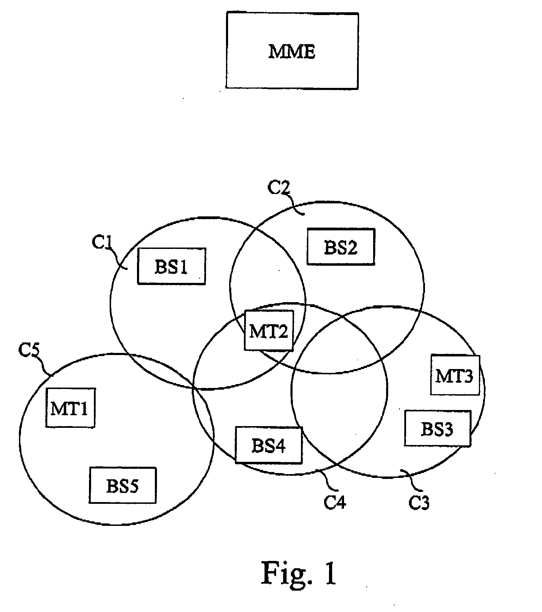

**Fig. 1** is a diagram representing the architecture of a wireless cellular telecommunication network in which the present invention is implemented.

In the wireless cellular telecommunication network, a mobility management entity MME is linked through a telecommunication network to a plurality of base stations BS1 to BS5.

The telecommunication network is a dedicated wired network or a public network like a public switched network or an IP based network or a wireless network or an Asynchronous Transfer Mode network or a combination of above cited networks.

The mobility management entity MME manages data associated to each mobile terminal MT the mobility management entity MME is in charge.

The mobility management entity MME is in charge of the mobile terminals MT which are located in an area of the wireless cellular telecommunication network the mobility management entity MME manages.

The mobility management entity MME tracks the location of the mobile terminals MT that the mobility management entity MME has in charge.

The data associated to each mobile terminal MT comprise at least the temporary identifier allocated by the mobility management entity MME to the mobile terminal MT and the univocal identifier of the mobile terminal MT.

A univocal identifier is an identifier which enables to uniquely identify the mobile terminal MT anytime and anywhere in the wireless cellular telecommunication network. A temporary identifier is an identifier which enables to uniquely identify a mobile terminal MT only in an area of the wireless cellular telecommunication network and/or is an identifier which is allocated for limited time duration. As the same temporary identifier may be allocated to plural mobile terminals MT at different time periods or in different areas of the wireless cellular telecommunication network, it is not possible to identify univocally a mobile terminal MT only with the temporary identifier.

The univocal identifier is, as example, the International Mobile Subscriber Identity of the mobile terminal MT stored in the SIM memory of the mobile terminal MT.

The univocal identifier can be also the phone number of the mobile terminal MT or the mail address of the user of the mobile terminal MT.

The temporary identifier is, as example, the TMSI assigned to the mobile terminal MT by the mobility management entity MME. TMSI stands for Temporary Mobile Subscriber Identity.

The data associated to each mobile terminal MT may comprise also the access rights of the mobile terminal MT, the authentication keys used for authenticating the mobile terminal MT, the encryption keys, the policy for delivering Quality of Service to the mobile terminal MT, the address of a user plane entity in charge of delivery of data to the mobile terminal MT, etc.

The base stations BS1 to BS5 are able to transfer and/or receive signals or messages through at least one area C1 to C5 they respectively manage. The areas C1 to C5 are named cells in wireless cellular telecommunication networks.

The base station BS1 transfers and/or receives signals or messages through the cell C1 it manages, the base station BS2 transfers and/or receives signals or messages through the cell C2 it manages, the base station BS3 transfers and/or receives signals or messages through the cell C3 it manages, the base station BS4 transfers and/or receives signals or messages through the cell C4 it manages and the base station BS5 transfers and/or receives signals or messages through the cell C5 it manages.

In the Fig. 1, three mobile terminals MT1 to MT3 are shown. The mobile terminal MT1 is located in the cell C5 of the base station BS5, the mobile terminal MT2 is located in the cell C1 of the base station BS1, in the cell C2 of the base station BS2 and in the cell C4 of the base station BS4. The mobile terminal MT3 is located in the cell C3 of the base station BS3.

Only three mobile terminals MT are shown in the Fig. 1, but we can understand that a more important number of mobile terminals MT are in the wireless cellular telecommunication network.

Only five base stations BS and one mobility management entity MME are shown in the Fig. 1, but we can understand that a more important number of base stations BS and mobility management entities MME are in the wireless cellular telecommunication network.

According to the invention, each base station BS memorises a list of temporary identifiers TMSI of mobile terminals MT for which the handover of communications, in which they are involved, is authorised from another base station BS to the base station BS.

The temporary identifiers TMSI comprised in the list of temporary identifiers TMSI of mobile terminals MT for which the handover of communications in which they are involved is authorised are temporary identifiers TMSI of mobile terminals MT for which a call establishment through the base station BS has been already allowed.

As example, the list of temporary identifiers TMSI memorised by the base station BS1 comprises the identifier of the mobile terminals MT1 and MT2.

The list of temporary identifiers TMSI, memorised by the base station BS2, comprises the identifiers of the mobile terminals MT1 and MT3. The list of temporary identifiers TMSI memorised by the base station BS3 comprises the identifier of the mobile terminal MT3. The list of temporary identifiers TMSI memorised by the base station BS4 comprises the identifier of the mobile terminal MT2 and the list of temporary identifiers TMSI memorised by the base station BS5 comprises the identifier of the mobile terminal MT5.

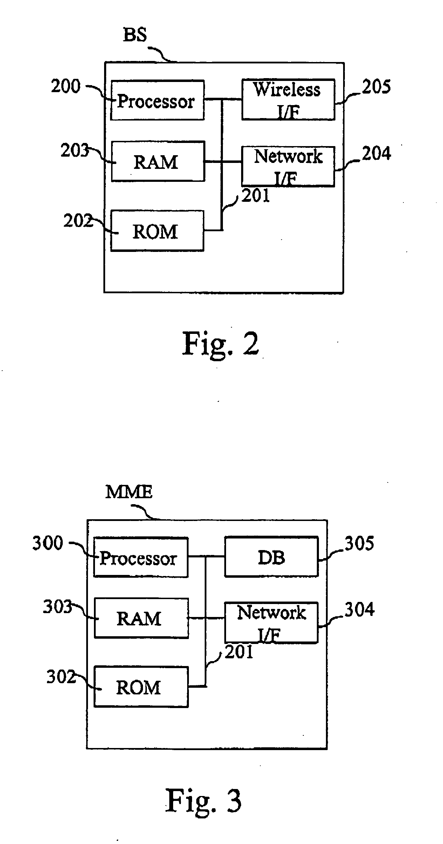

Fig. 2 is a block diagram of a base station according to the present invention.

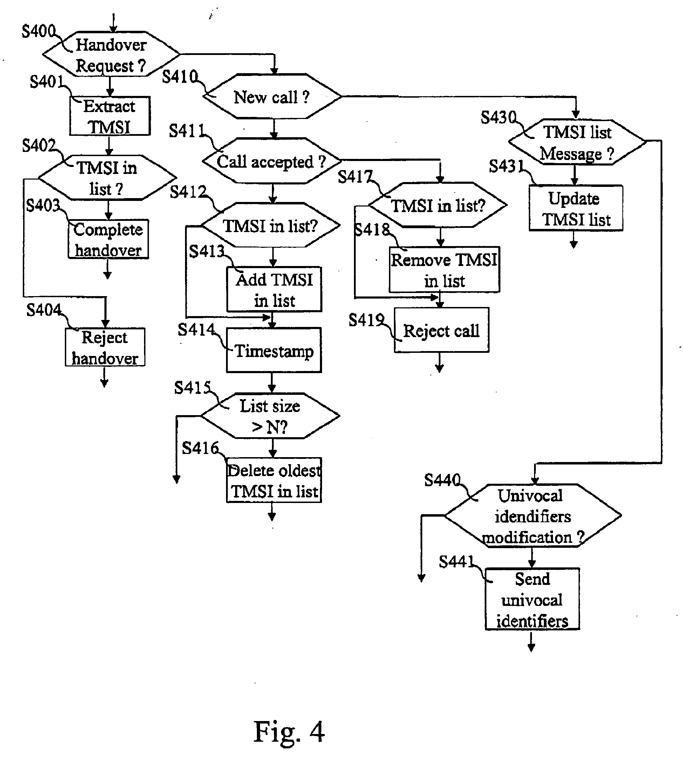

The base station BS has, for example, an architecture based on components connected together by a bus 201 and a processor 200 controlled by the program as disclosed in the Fig. 4.

The bus 201 links the processor 200 to a read only memory ROM 202, a random access memory RAM 203, a wireless interface 205 and a network interface 204.

The memory 203 contains registers intended to receive variables, of mobile terminals MT for which the handover of communications, in which they are involved, are authorised from another base station BS to the base station BS and the instructions of the program related to the algorithm as disclosed in the Fig. 4.

The processor 200 controls the operation of the network interface 204 and of the wireless interface 205.

The read only memory 202 contains instructions of the programs related to the algorithm as disclosed in the Fig. 4, which are transferred, when the base station BS is powered on to the random access memory 203.

The base station BS is connected to the telecommunication network through the network interface 204. As example, the network interface 204 is a DSL (Digital Subscriber Line) modem, or an ISDN (Integrated Services Digital Network) interface, etc. Through such interface, the base station BS exchanges information with the mobility management entity MME.

The wireless interface 205 enables the base station BS to transfer and/or receive signals or messages in the cell C the base station BS manages.

When a base station BS manages a mobile terminal MT, the mobile terminal MT can establish or receive a communication with a remote telecommunication device through the wireless interface 205 and the network interface 204.

Fig. 3 is a block diagram of a mobility management entity according to the present invention.

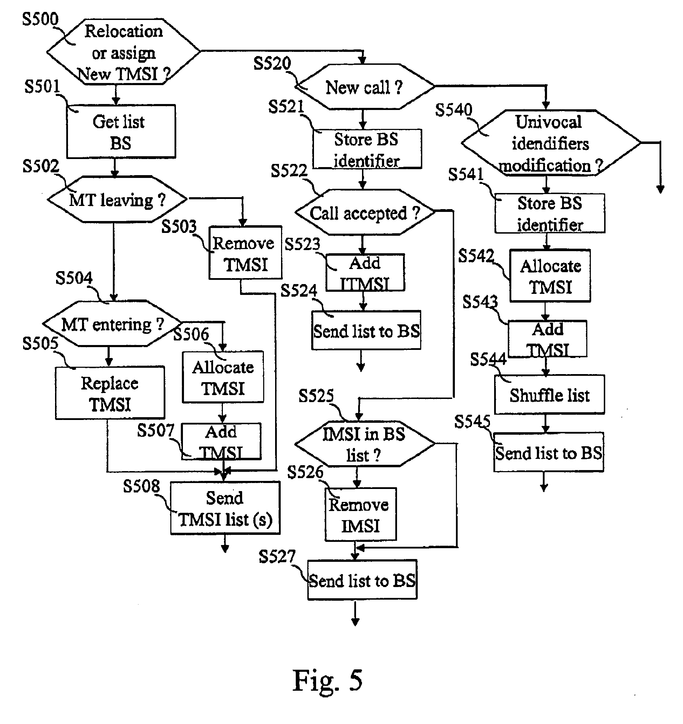

The mobility management entity MME has, for example, an architecture based on components connected together by a bus 301 and a processor 300 controlled by the program as disclosed in the Fig. 5.

The bus 301 links the processor 300 to a read only memory ROM 302, a random access memory RAM 303, a data base 305 and a network interface 304.

The memory 303 contains registers intended to receive variables and the instructions of the program related to the algorithm as disclosed in the Fig. 5.

The processor 300 controls the operation of the network interface 304.

The read only memory 302 contains instructions of the programs related to the algorithm as disclosed in the Fig. 5, which are transferred when the mobility management entity MME is powered on to the random access memory 303.

The mobility management entity MME is connected to the telecommunication network through the network interface 304. As example, the network interface 304 is a DSL (Digital Subscriber Line) modem, or an ISDN (Integrated Services Digital Network) interface, etc. Through such interface, the mobility management entity MME exchanges information with the base stations BS.

The database 305 memorises, for each base station BS which is connected to the mobility management entity MME, a list of univocal identifiers of mobile terminals MT for which the handover of communication in which they are involved are authorised from another base station BS to the base station BS.

The database 305 memorises, for each univocal identifier of a mobile terminal MT memorised in the database 305, a link between the univocal identifier and temporary identifier TMSI allocated of the mobile terminal MT if there is one currently allocated.

Preferably and in a non limitative way, the database 305 memorises also, for each base station BS which is connected to the mobility management entity MME, a list of temporary identifiers TMSI of mobile terminals MT for which the handover of communication, in which they are involved, are authorised from another base station BS to the base station BS.

Fig. 4 depicts an algorithm executed by each base station according to the present invention.

More precisely, the present algorithm is executed by the processor 200 of each base station BS.

At step S400, the processor 200 checks if a handover request command is received through the network interface 204 from another base station BS. The handover request command is representative of a request to allow a communication in which a mobile terminal MT is involved through another base station BS to go through the wireless interface 205 and the network interface 204 of the base station BS.

As example, the handover request command is representative of the request to allow a communication in which a mobile terminal MT2 is involved through the base station BS4 to be continued through the base station BS1.

If a handover request command is received, the processor 200 moves to step S401. Otherwise, the processor 200 moves to step S410.

At step S401, the processor 200 extracts, from the received message, the temporary identifier TMSI of the mobile terminal MT for which the handover is requested, i.e. extracts the temporary identifier TMSI of the mobile terminal MT2.

At next step S402, the processor 200 checks if the extracted temporary identifier TMSI is comprised in the list of temporary identifiers TMSI memorised in the RAM memory 203. If the extracted temporary identifier TMSI is comprised in the list of temporary identifiers TMSI, the processor 200 moves to step S403. If the extracted temporary identifier TMSI is not comprised in the list of temporary identifiers TMSI, the processor 200 moves to step S404.

As example, as the list of temporary identifiers TMSI memorised by the base station BS1 comprises the identifiers of the mobile terminals MT1 and MT2, the processor 300 of the base station BS1 moves to step S403.

If the handover request command is representative of the request to allow a communication in which a mobile terminal MT2 is involved through the base station BS4 to be continued through the base station BS2, the list of temporary identifiers TMSI memorised by the base station BS2 doesn't comprise the identifier of the mobile terminal MT2, the processor 300 of the base station BS2 moves to step S404.

At step S403, the processor 200 commands the transfer of a handover response message to the base station BS from which the handover request command message received at step S400 has been received.

The handover response message is representative of an agreement for proceeding to the handover of communication in which the mobile terminal MT is involved.

The processor 200 of the base station BS1 commands the transfer of the handover response message to the base station BS1. The communication, in which the mobile terminal MT2 is involved, is going through the wireless interface 205 and the network interface 204 of the base station BS1.

After that, the processor 200 returns to step S400 and waits for the reception of a new message.

At step S404, the processor 200 commands the transfer of handover rejection message to the base station BS from which the handover request command message received at step S400 has been received.

The rejection response message is representative of a refusal for proceeding to the handover of the communication in which the mobile terminal MT is involved.

The processor 200 of the base station BS2 commands the transfer of the handover rejection message to the base station BS4.

At step S410, the processor 200 checks if the received message is a call establishment request transferred by a mobile terminal MT located in the cell C of the base station BS.

A call establishment request is a message comprising the temporary identifier TMSI of the mobile terminal MT which sends the call establishment request. The call establishment request is sent when a mobile terminal MT intends to establish a communication with a remote telecommunication device through the base station BS and the wireless cellular telecommunication network.

As example, the mobile terminal MT3 sends the call establishment request to the base station BS3.

If the received message is a call establishment request, the processor 200 moves to step S411. Otherwise, the processor 200 moves to step S430.

At step S411, the processor 200 checks if the call establishment is authorised by an entity of the wireless cellular telecommunication network. As example and in a non limitative way, the processor 200 commands the transfer of the call establishment request message to the mobility management entity MME. The message comprises the temporary identifier TMSI of the mobile terminal MT which sent the message received at step S400.

The mobility management entity MME determines from the temporary identifier TMSI and from the data associated to the mobile terminal MT identified by the TMSI, if the call establishment is accepted or not. In response, the mobility management entity MME transfers the result of the determination to the base station BS.

If the call establishment is authorised by one entity of the wireless cellular telecommunication network, the processor 200 moves to step S412. Otherwise, the processor 200 moves to step S417.

At step S412, the processor 200 checks if the temporary identifier TMSI, comprised in the received message, is comprised in the list of temporary identifiers TMSI memorised in the RAM memory 203. The list of temporary identifiers TMSI, memorised in the RAM memory 203, is the list of temporary identifiers TMSI of mobile terminals MT for which the handover of communications in which they are involved is authorised from another base station BS to the base station BS.

If the temporary identifier TMSI is comprised in the list of temporary identifiers TMSI, the processor 200 moves to step S414. If the temporary identifier TMSI comprised in the received message is not comprised in the list of temporary identifiers TMSI, the processor 200 moves to step S414.

At step S413, the processor 200 adds the temporary identifier TMSI of the mobile terminal MT which sent the message received at step S400 in the list of temporary identifiers TMSI memorised in the RAM memory 203. After that, the processor 200 moves to step S414.

At step S414, the processor 200 stores a timestamp associated to the temporary identifier TMSI of the mobile terminal MT which sent the message received at step S400.

At next step S415, the processor 200 checks if the number of temporary identifiers TMSI comprised in the list of temporary identifiers TMSI is upper than a predetermined value N.

If the number of temporary identifiers TMSI comprised in the list of temporary identifiers TMSI is upper than N, the processor 200 moves to step S416. Otherwise, the processor 200 returns to step S400 and waits for the reception of a new message.

At step S416, the processor 200 removes the temporary identifier TMSI to which the oldest timestamp is associated from the list of temporary identifiers TMSI. At the same step, the processor 200 deletes the oldest timestamp.

After that, the processor 200 returns to step S400 and waits for the reception of a new message.

At step S417, the processor 200 checks if the temporary identifier TMSI is comprised in the list of temporary identifiers TMSI memorised in the RAM memory 203. If the temporary identifier TMSI is comprised in the list of temporary identifiers TMSI, the processor 200 moves to step S418. If the extracted temporary identifier TMSI is not comprised in the list of temporary identifiers TMSI, the processor 200 moves to step S419.

At step S418, the processor 200 removes the temporary identifier TMSI of the mobile terminal MT which sent the message received at step S400 from the list of temporary identifiers TMSI memorised in the RAM memory 203.After that, the processor 200 moves to step S419.

At step S419, the processor 200 rejects the call establishment request transferred by the mobile terminal MT at step S400.

After that, the processor 200 returns to step S400 and waits for the reception of a new message.

At step S430, the processor 200 checks if the message received at step S400 is a message representative of a modification of the list of temporary identifiers TMSI.

If the message is a message representative of a modification of the list of temporary identifiers TMSI, the processor 200 moves to step S431. Otherwise, the processor 200 moves to step S440.

According to a first mode of realisation, the message comprises a new list of temporary identifiers TMSI to be stored in the RAM memory 203.

According to a second mode of realisation, the message comprises two temporary identifiers TMSI of a mobile terminal MT. One temporary identifier TMSI is the temporary identifier TMSI which was previously allocated to the mobile terminal MT and the other temporary identifier TMSI is the identifier newly allocated to the mobile terminal MT.

According to a third mode of realisation, the message comprises a deletion command and the temporary identifier TMSI of a mobile terminal MT.

According to a fourth mode of realisation, the message comprises an addition command and the temporary identifier TMSI of a mobile terminal MT.

At next step S431, the processor 200 updates the list of temporary identifiers TMSI memorised in the RAM memory 203.

According to the first mode of realisation, the processor 200 stores the new list of temporary identifiers TMSI in the RAM memory 203 and updates each timestamp associated to a temporary identifier TMSI in the list.

According to the second mode of realisation, the processor 200 replaces in the list of temporary identifiers TMSI, the temporary identifier TMSI which was previously allocated to the mobile terminal MT by the other temporary identifier TMSI and updates the associated timestamp.

According to the third mode of realisation, the processor 200 deletes the temporary identifier TMSI of a mobile terminal MT and deletes the associated timestamp.

According to the fourth mode of realisation, the processor 200 adds the temporary identifier TMSI in the list of temporary identifiers TMSI and associates a timestamp to it.

After that, the processor 200 returns to step S400 and waits for the reception of a new message.

According to a particular mode of realisation of the present invention, the base station BS comprises a list of univocal identifiers. Each univocal identifier of the list is the univocal identifier of a mobile terminal which is authorised, by the person who manages the base station BS, to establish or continue a communication through the base station BS.

According to that particular mode of realisation, the processor 200 checks at step S440, if there is a modification of at least one univocal identifier of a mobile terminal MT.

If there is a modification of at least one univocal identifier of at least one mobile terminal MT, the processor 200 moves to step S441. Otherwise, the processor 200 returns to step S400.

A modification of at least one univocal identifier is executed by the person who manages the base station BS. As example, the person enters a new list of at least one univocal identifier through a man machine interface of the base station BS. Preferably and in a non limitative way, the list of at least one univocal identifier comprises plural univocal identifiers.

Each univocal identifier is the univocal identifier of a mobile terminal MT which is authorised, by the person who manages the base station BS, to establish or continue a communication through the base station BS or in other words of mobile terminals MT having access rights through the base station BS.

At step S441, the processor 200 commands the transfer of the list comprising at least one univocal identifier of a mobile terminal MT to the mobility management entity MME. After that the processor returns to step S441.

Fig. 5 depicts an algorithm executed by the mobility management entity according to the present invention.

More precisely, the present algorithm is executed by the processor 300 of the mobility management entity MME.

At step S500, the processor 300 checks if a relocation of a mobile terminal MT needs to be executed or if a new temporary identifier TMSI of a mobile terminal MT needs to be allocated.

A relocation of a mobile terminal MT needs to be performed when the mobile terminal MT enters or leaves the area managed by the mobility management entity MME.

A new temporary identifier TMSI needs to be allocated to a mobile terminal MT as example when the mobile terminal MT enters in an area managed by a new mobility management entity MME or when the temporary identifier TMSI has been allocated to a mobile terminal MT for a predetermined period of time.

If a relocation of a mobile terminal MT has to be executed and/or a new temporary identifier TMSI of a mobile terminal MT has to be allocated, the processor 300 moves to step S501. Otherwise, the processor 300 moves to step S520.

At step S501, the processor 300 gets from the database 305, a list of base stations BS through which a call establishment request, by the mobile terminal MT has been authorized to go through. For that, the processor 300 uses the univocal identifier of the mobile terminal MT under process, i.e. involved in the relocation and/or for which the temporary identifier TMSI needs to be assigned.

At next step S502, the processor 300 checks if the mobile terminal MT under process is leaving the area managed by the mobility management entity MME. When the mobile terminal MT is leaving the area managed by the mobility management entity MME, the mobility management entity MME receives a message from another management entity MME which manages the area in which the mobile terminal MT is entering.

If the mobile terminal MT is leaving the area managed by the mobility management entity MME, the processor 300 moves to step S503. Otherwise, the processor 300 moves to step S504.

At step S503, the processor 300 deletes the temporary identifier TMSI of the mobile terminal MT under process from the database 305 and deletes the link between the temporary identifier TMSI and the univocal identifier.

After that, the processor 300 moves to step S508.

At step S504, the processor 300 checks if the mobile terminal MT under process is entering the area managed by the mobility management entity MME.

If the mobile terminal MT under process is entering the area managed by the mobility management entity MME, the processor 300 moves to step S506. Otherwise, the processor 300 moves to step S505.

When the mobile terminal MT is entering the area managed by the mobility management entity MME, the mobility management entity MME receives a message from a base station located in the area the mobility management entity MME manages.

At step S505, the processor 300 replaces in the database 305, the temporary identifier TMSI linked to the univocal identifier of the mobile terminal MT under process by a new temporary identifier TMSI.

At step S506, the processor 300 allocates a temporary identifier TMSI to the mobile terminal MT under process.

At next step S507, the processor 300 adds in the database 305 the link between the temporary identifier TMSI and the univocal identifier of the mobile terminal MT under process. The processor 300 adds for the base station BS, the univocal identifier of the mobile terminal MT under process in the list of mobile terminals MT for which the handover of communications, in which they are involved, is authorised from another base station BS to the base station BS

After that, the processor 300 moves to step S508.

At step S508, the processor 300 transfers, to each base station BS identified in the list obtained at step S501, a message representative of a modification of the list of temporary identifiers TMSI.

According to the first mode of realisation, each message transferred to a base station BS comprises the list of temporary identifiers TMSI which has to replace the list of temporary identifiers TMSI stored by the base station BS in the RAM memory 203.

According to the second mode of realisation, each message comprises two temporary identifiers TMSI of the mobile terminal MT under process. One temporary identifier TMSI is the temporary identifier TMSI which was previously allocated to the mobile terminal MT and the other temporary identifier TMSI is the identifier newly allocated to the mobile terminal MT.

According to the third mode of realisation, the message comprises a deletion command and the temporary identifier TMSI allocated to the mobile terminal MT at step S505 or S506.

According to the fourth mode of realisation, the message comprises an addition command and the temporary identifier TMSI deleted at step S503.

After that, the processor 300 returns to step S500.

At step S520, the processor 300 checks if a call establishment request message is received from a base station BS. The call establishment request message is as the one disclosed at step S411 of the Fig. 4. The message comprises the temporary identifier TMSI of the mobile terminal MT which sent the message to the base station BS.

At next step S521, the processor 300 memorises in the RAM memory 303 the identifier of the base station BS which sent the call establishment request message.

At step S522, the processor 300 determines the univocal identifier which is linked to the temporary identifier TMSI, and determines from the data associated to the mobile terminal MT, if the call establishment is accepted or not.

If the call establishment is accepted, the processor 300 moves to step S523. Otherwise, the processor 300 moves to step S525.

At step S523, the processor 300 adds for the base station BS the univocal identifier of the mobile terminal MT under process in the list of mobile terminals MT for which the handover of communications in which they are involved is authorised from another base station BS to the base station BS.

According to a variant of realisation, the mobility management entity MME manages the list of temporary identifiers memorized by each base station BS instead of the base stations BS as it has been disclosed at step S413, S4118 and S416 of the Fig. 4.

According to that variant, the processor 300 sends at next step S524 the list of temporary identifiers TMSI that are authorised to the base station BS of which the identifier has been memorised at step S521.

At step S525, the processor 300 checks if the temporary identifier TMSI of the mobile terminal MT is comprised in the list comprising the temporary identifiers TMSI of mobile terminals MT for which the handover of communication in which they are involved is authorised from another base station BS to the base station BS of which the identifier has been memorised at step S521.

If the temporary identifier TMSI of the mobile terminal MT is comprised in the list, the processor 300 moves to step S526. Otherwise, the processor 300 moves to step S527.

At step S526, the processor 300 removes the temporary identifier TMSI of the mobile terminal MT from the list comprising the temporary identifiers TMSI of mobile terminals MT for which the handover of communications in which they are involved is authorised from another base station BS to the base station BS.

At next step S527, the processor 300 sends the list of temporary identifiers TMSI that are authorised to the base station BS of which the identifier has been memorised at step SS21.

After that, the processor 300 returns to step S500.

At step S540, the processor 300 checks if one list of univocal identifiers of mobile terminals MT, for which the handover of communications in which they are involved, are authorised from another base station BS to a base station BS needs to be modified.

A list of univocal identifiers needs to be modified when a message comprising a list of at least one univocal identifier of a mobile terminal MT is received from a base station BS or when the mobile terminal MT becomes client of the wireless cellular telecommunication network.

If a message comprising a list of at least one univocal identifier of a mobile terminal MT is received from a base station BS or if the list comprising the univocal identifiers mobile terminals MT for which the handover of communications in which they are involved are authorised from another base station BS to the base station BS comprises at least one univocal identifier of a mobile terminal MT which becomes client of the wireless cellular telecommunication network, the processor 300 moves to step S541. Otherwise, the processor 300 returns to step S500.

At step S541, the processor 300 memorises in the RAM memory 303 the identifier of the base station BS which sent the message or the identifier of the base station of which the list comprising the univocal identifiers of mobile terminals MT for which the handover of communications in which they are involved are authorised from another base station BS to the base station BS comprises the univocal identifier of a mobile terminal MT which becomes client of the wireless cellular telecommunication network.

At next step S542, the processor 300 determines a temporary identifier TMSI for each univocal identifier comprised in the list of at least one univocal identifier of a mobile terminal MT received from the base station BS or determines a temporary identifier TMSI for the mobile terminal MT which becomes client and links it to the univocal identifier.

At next step S543, the processor 300 adds each determined temporary identifier TMSI in the list of temporary identifiers TMSI of mobile terminals MT for which the handover of communications in which they are involved are authorised from another base station BS to the base station BS.

At next step S544, the processor 200 shuffles the new list of temporary identifiers TMSI of mobile terminals MT for which the handover of communication in which they are involved are authorised from another base station BS to the base station BS obtained at step S543. Shuffle means that each temporary identifier TMSI has a position in the shuffled list which is different from the position of the univocal identifier it is linked to in the list of univocal identifiers received at step S540.

At next step S545, the processor 300 sends the shuffle list to the base station BS of which the identifier has been memorised at step S541.

After that, the processor 200 returns to step S500.

Naturally, many modifications can be made to the embodiments of the invention described above without departing from the scope of the present invention.

## Claims

1. Method for determining if a handover of a communication in which a first mobile terminal is involved has to be executed from a first base station to a second base station of a wireless cellular telecommunication network, the second base station receiving a temporary identifier allocated to the first mobile terminal, said method comprises the steps executed by the second base station of:
- receiving (S400) a first message requesting to hand over the communication in which the first mobile terminal is involved from the first base station to the second base station, the message comprising the temporary identifier allocated to the first mobile terminal, **characterised by** the steps of
- checking (S402) if the temporary identifier comprised in the first message is comprised in a list of temporary identifiers of mobile terminals for which the handover of communications in which they are involved is authorised, the list of temporary identifiers of mobile terminals for which the handover of communications in which they are involved is authorised being of temporary identifiers of mobile terminals for which a call establishment through the second base station has already been allowed,
- transferring a second message to the first base station, the second message being representative of an agreement (S403) for executing the handover of the communication if the temporary identifier comprised in the first message is comprised in the list of temporary identifiers or the second message being representative of a refusal (S404) for executing the handover of the communication if the temporary identifier comprised in the first message is not comprised in a list of temporary identifiers.

2. Method according to claim 1, **characterised in that** the method comprises further steps of:
- receiving (S410) from a second mobile terminal a third message requesting an establishment of a communication with a remote telecommunication device through the second base station, the third message comprising a temporary identifier allocated to the second mobile terminal,
- checking (S411) if the establishment of the communication is authorised by a mobility management entity of the wireless cellular telecommunication network,
- inserting (S413) the identifier of the second mobile terminal in the list of temporary identifiers of mobile terminals if the establishment of the communication is authorised.

3. Method according to claim 2, **characterised in that** the method comprises further steps of:
- receiving (S430) from the mobility management entity a fourth message comprising another list of temporary identifiers of mobile terminals,
- replacing (S431) the list of temporary identifiers of mobile terminals by the other list of temporary identifiers of mobile terminals comprised in the fourth message.

4. Method according to claim 2, **characterised in that** the method comprises further steps of:
- receiving from the mobility management entity a fourth message comprising at least one pair of temporary identifiers of mobile terminals,
- replacing in the list of temporary identifiers of mobile terminals, each temporary identifier that corresponds to the first element of a pair by the second element of the pair.

5. Method according to claim 2, **characterised in that** the method comprises further steps of:
- receiving from the mobility management entity a fourth message comprising at least one command and at least one temporary identifier,
- adding in the list of temporary identifiers of mobile terminals or suppressing from the list of temporary identifiers of mobile terminals, the at least one temporary identifier comprised in the fourth message according to the at least one command.

6. Method according to any of the claims 2 to 5, **characterised in that** the second base station memorises a list of univocal identifiers of mobile terminals and **in that** the method further comprises the steps of:
- transferring a fifth message to the mobility management entity comprising the list of univocal identifiers of mobile terminals,
- receiving in response to the fifth message a sixth message comprising a list of temporary identifiers allocated to the mobile terminals of which univocal identifiers are comprised in the fifth message.

7. Method for enabling the determination, if a handover of a communication in which a first mobile terminal is involved has to be executed between base stations in an area managed by a mobility management entity of a wireless cellular telecommunication network, said method comprises the steps executed by the mobility management entity of:
- allocating (S506) a temporary identifier to the first mobile terminal, characterising the steps of
- obtaining a list of base stations through which a communication of the first mobile terminal has been authorized to go through,
- transferring (SS08), to each base station identified in the list of base stations a first message comprising at least the temporary identifier of the first mobile terminal.

8. Method according to claim 7, **characterised in that** the method comprises further steps of:
- receiving (S520), from a base station, a second message requesting an establishment through the base station of a communication of the first mobile terminal is involved, the second message comprising a temporary identifier allocated to the first mobile terminal,
- accepting (S522) the establishment of the communication through the base station,
- modifying (S523) the list of base stations through which a communication of the first mobile terminal has been authorized to go through.

9. Method according to claim 7 or 8 **characterised in that** the mobility management entity memorises, for each base station, a list of univocal identifiers of mobile terminals for which the handover, from another base station to the base station, of communications in which the mobile terminals are involved is authorised, and **in that** the method comprises further steps of :
- transferring a third message to the base station when the list of univocal identifiers of mobile terminals is modified, the third message comprising a list of temporary identifiers of mobile terminals for which the handover of communications from another base station to the base station in which they are involved is authorised.

10. Method according to claim 9, **characterised in that** the list of univocal identifiers of mobile terminals for which the handover of communication from another base station to the base station in which the mobile terminal are involved is authorised is received from the base station and **in that** each temporary identifier of a mobile terminal in the list comprised in the third message has a position in the list comprised in the third message which is different from the position of the univocal identifier of the mobile terminal in the received list of univocal identifiers.

11. Device for determining if a handover of a communication in which a first mobile terminal is involved has to be executed from a first base station to a second base station of a wireless cellular telecommunication network, the second base station receiving a temporary identifier allocated to the first mobile terminal, said device is included in the second base station and the device comprises:
- means for receiving a first message requesting to hand over the communication in which the first mobile terminal is involved from the first base station to the second base station, the message comprising the temporary identifier allocated to the first mobile terminal, **characterised by**
- means for checking if the temporary identifier comprised in the first message is comprised in a list of temporary identifiers of mobile terminals for which the handover of communications in which they are involved is authorised, the list of temporary identifiers of mobile terminals for which the handover of communications in which they are involved is authorised being of temporary identifiers of mobile terminals for which a call establishment through the second base station has already been allowed,
- means for transferring a second message to the first base station, the second message being representative of an agreement for executing the handover of the communication if the temporary identifier comprised in the first message is comprised in the list of temporary identifiers or the second message being representative of a refusal for executing the handover of the communication if the temporary identifier comprised in the first message is not comprised in a list of temporary identifiers.

12. Device for enabling the determination, if a handover of a communication in which a first mobile terminal is involved has to be executed between base stations in an area managed by a mobility management entity of a wireless cellular telecommunication network, said device is included in the mobility management entity and comprises:
- means for allocating a temporary identifier to the first mobile terminal, characterising
- means for obtaining a list of base stations through which a communication of the first mobile terminal has been authorized to go through,
- means for transferring, to each base station identified in the list of base stations, a first message comprising at least the temporary identifier of the first mobile terminal.

13. Computer program which can be directly loadable into a programmable device, comprising instructions or portions of code for implementing the steps of the method according to claims 1 to 6, when said computer program is executed on a programmable device.

14. Computer program which can be directly loadable into a programmable device, comprising instructions or portions of code for implementing the steps of the method according to claims 7 to 10, when said computer program is executed on a programmable device.

## Patentansprüche

1. Verfahren zum Bestimmen, ob eine Übergabe einer Kommunikation, bei welcher ein erstes mobiles Endgerät beteiligt ist, von einer ersten Basisstation zu einer zweiten Basisstation eines drahtlosen zellularen Telekommunikationsnetzes auszuführen ist, wobei die zweite Basisstation einen dem ersten mobilen Endgerät zugeteilten temporären Identifizierer empfängt, wobei das Verfahren die durch die zweite Basisstation ausgeführten folgenden Schritte aufweist:
- Empfangen (S400) einer ersten Nachricht, die dazu auffordert, die Kommunikation, bei welcher das erste mobile Endgerät beteiligt ist, von der ersten Basisstation zu der zweiten Basisstation zu übergeben, wobei die Nachricht einen dem ersten mobilen Endgerät zugeteilten ersten temporären Identifizierer umfasst, **gekennzeichnet durch** die folgenden Schritte:
- Prüfen (S402), ob der in der ersten Nachricht umfasste temporäre Identifizierer in einer Liste temporärer Identifizierer mobiler Endgeräte umfasst ist, für welche die Übergabe von Kommunikationen, bei welchen sie beteiligt sind, autorisiert ist, wobei die Liste von temporären Identifizierern mobiler Endgeräte, für welche die Übergabe von Kommunikationen, bei welchen sie beteiligt sind, autorisiert ist, von temporären Identifizierern mobiler Endgeräte ist, für welche ein Anrufaufbau **durch** die zweite Basisstation bereits zugelassen worden ist,
- Transferieren einer zweiten Nachricht zu der ersten Basisstation, wobei die zweite Nachricht eine Einwilligung (S403) zum Ausführen der Übergabe der Kommunikation darstellt, wenn der in der ersten Nachricht umfasste temporäre Identifizierer in der Liste von temporären Identifizierern umfasst ist, oder die zweite Nachricht eine Ablehnung (S404) zum Ausführen der Übergabe der Kommunikation darstellt, wenn der in der ersten Nachricht umfasste temporäre Identifizierer nicht in einer Liste von temporären Identifizierern umfasst ist.

2. Verfahren nach Anspruch 1, **dadurch gekennzeichnet, dass** das Verfahren folgende weitere Schritte aufweist:
- Empfangen (S410) einer dritten Nachricht von einem zweiten mobilen Endgerät, die zu einem Aufbau einer Kommunikation mit einer entfernten Telekommunikationsvorrichtung über die zweite Basisstation auffordert, wobei die dritte Nachricht einen dem zweiten mobilen Endgerät zugeteilten temporären Identifizierer umfasst,
- Prüfen (S411), ob der Aufbau der Kommunikation autorisiert ist, durch eine Mobilitätsmanagementeinheit des drahtlosen zellularen Telekommunikationsnetzwerks,
- Einfügen (S413) des Identifizierers des zweiten mobilen Endgeräts in die Liste von temporären Identifizierern mobiler Endgeräte, wenn der Aufbau der Kommunikation autorisiert ist.

3. Verfahren nach Anspruch 2, **dadurch gekennzeichnet, dass** das Verfahren folgende weitere Schritte aufweist:
- Empfangen (S430) einer vierten Nachricht, die eine weitere Liste von temporären Identifizierern mobiler Endgeräte umfasst, von der Mobilitätsmanagementeinheit,
- Ersetzen (S431) der Liste von temporären Identifizierern mobiler Endgeräte durch die weitere Liste von temporären Identifizierern von in der vierten Nachricht umfassten mobilen Endgeräten.

4. Verfahren nach Anspruch 2, **dadurch gekennzeichnet, dass** das Verfahren folgende weitere Schritte aufweist:
- Empfangen einer vierten Nachricht, die wenigstens ein Paar von temporären Identifizierern mobiler Endgeräte umfasst, von der Mobilitätsmanagementeinheit,
- Ersetzen jedes temporären Identifizierers, der dem ersten Element eines Paars entspricht, durch das zweite Element des Paars in der Liste von temporären Identifizierern mobiler Endgeräte.

5. Verfahren nach Anspruch 2, **dadurch gekennzeichnet, dass** das Verfahren folgende weitere Schritte aufweist:
- Empfangen einer vierten Nachricht, die wenigstens einen Befehl und wenigstens einen temporären Identifizierer umfasst, von der Mobilitätsmanagementeinheit,
- Hinzufügen in die oder Verdrängen aus der Liste von temporären Identifizierern mobiler Endgeräte des in der vierten Nachricht umfassten wenigstens einen temporären Identifizierers gemäß dem wenigstens einen Befehl.

6. Verfahren nach einem der Ansprüche 2 bis 5, **dadurch gekennzeichnet, dass** die zweite Basisstation sich eine Liste eindeutiger Identifizierer mobiler Endgeräte merkt und dass das Verfahren weiterhin die folgenden Schritte aufweist:
- Transferieren einer fünften Nachricht, die die Liste eindeutiger Identifizierer mobiler Endgeräte umfasst, zu der Mobilitätsmanagementeinheit,
- in Reaktion auf die fünfte Nachricht Empfangen einer sechsten Nachricht, die eine Liste von temporären Identifizierern umfasst sind, die den mobilen Endgeräten zugeteilt sind, von welchen eindeutige Identifizierer in der fünften Nachricht umfasst sind.

7. Verfahren zum Ermöglichen der Bestimmung, ob eine Übergabe einer Kommunikation, bei welcher ein erstes mobiles Endgerät beteiligt ist, zwischen Basisstationen in einem Gebiet auszuführen ist, das durch eine Mobilitätsmanagementeinheit eines drahtlosen zellularen Telekommunikationsnetzes gemanagt wird, wobei das Verfahren die durch die Mobilitätsmanagementeinheit ausgeführten folgenden Schritte aufweist:
- Zuteilen (S506) eines temporären Identifizierers zu dem ersten mobilen Endgerät, **gekennzeichnet durch** die folgenden Schritte:
- Erhalten einer Liste von Basisstationen, über welche eine Kommunikation des ersten mobilen Endgeräts durchzugehen autorisiert worden ist,
Transferieren (S508) einer ersten Nachricht, die wenigstens den temporären Identifizierer des ersten mobilen Endgeräts umfasst, zu jeder in der Liste von Basisstationen identifizierten Basisstation.

8. Verfahren nach Anspruch 7, **dadurch gekennzeichnet, dass** das Verfahren folgende weitere Schritte aufweist:
- Empfangen (S520) einer zweiten Nachricht, die zu einem Aufbau einer Kommunikation, bei welcher das erste mobile Endgerät beteiligt ist, über die zweite Basisstation auffordert, von einer Basisstation, wobei die zweite Nachricht einen dem ersten mobilen Endgerät zugeteilten temporären Identifizierer umfasst,
- Annehmen (S522) des Aufbaus der Kommunikation über die Basisstation,
- Modifizieren (S523) der Liste von Basisstationen, über welche eine Kommunikation des ersten mobilen Endgeräts durchzugehen autorisiert worden ist.

9. Verfahren nach Anspruch 7 oder 8, **dadurch gekennzeichnet, dass** die Mobilitätsmanagementeinheit sich für jede Basisstation eine Liste eindeutiger Identifizierer mobiler Endgeräte merkt, für welche die Übergabe von Kommunikationen, bei welchen die mobilen Endgeräte beteiligt sind, von einer weiteren Basisstation zu der Basisstation autorisiert ist, und dass das Verfahren folgende weitere Schritte aufweist:
- Transferieren einer dritten Nachricht zu der Basisstation, wenn die Liste eindeutiger Identifizierer mobiler Endgeräte modifiziert ist, wobei die dritte Nachricht eine Liste von temporären Identifizierern mobiler Endgeräte umfasst, für welche die Übergabe von Kommunikationen, bei welchen sie beteiligt sind, von einer weiteren Basisstation zu der Basisstation autorisiert ist.

10. Verfahren nach Anspruch 9, **dadurch gekennzeichnet, dass** die Liste eindeutiger Identifizierer mobiler Endgeräte, für welche die Übergabe einer Kommunikation, bei welcher das mobile Endgerät beteiligt ist, von einer weiteren Basisstation zu der Basisstation autorisiert ist, von der Basisstation empfangen wird und dass jeder temporäre Identifizierer eines mobilen Endgeräts in der Liste, die in der dritten Nachricht umfasst ist, eine Position in der Liste hat, die in der dritten Nachricht umfasst ist, die unterschiedlich von der Position des eindeutigen Identifizierers des mobilen Endgeräts in der empfangenen Liste von eindeutigen Identifizierern ist.

11. Vorrichtung zum Bestimmen, ob eine Übergabe einer Kommunikation, bei welcher ein erstes mobiles Endgerät beteiligt ist, von einer ersten Basisstation zu einer zweiten Basisstation eines drahtlosen zellularen Telekommunikationsnetzes auszuführen ist, wobei die zweite Basisstation einen dem ersten mobilen Endgerät zugeteilten temporären Identifizierer empfängt, wobei die Vorrichtung in der zweiten Basisstation enthalten ist und die Vorrichtung folgendes aufweist:
- eine Einrichtung zum Empfangen einer ersten Nachricht, die dazu auffordert, die Kommunikation, bei welcher das erste mobile Endgerät beteiligt ist, von der ersten Basisstation zu der zweiten Basisstation zu übergeben, wobei die Nachricht den dem ersten mobilen Endgerät zugeteilten temporären Identifizierer umfasst, **gekennzeichnet durch**
- eine Einrichtung zum Prüfen, ob der in der ersten Nachricht umfasste temporäre Identifizierer in einer Liste von temporären Identifizierern mobiler Endgeräte umfasst ist, für welche die Übergabe von Kommunikationen, bei welchen sie beteiligt sind, autorisiert ist, wobei die Liste von temporären Identifizierern mobiler Endgeräte, für welche die Übergabe von Kommunikationen, bei welchen sie beteiligt sind, autorisiert ist, von temporären Identifizierern mobiler Endgeräte ist, für welche eine Anrufaufbau über die zweite Basisstation bereits zugelassen worden ist,
- eine Einrichtung zum Transferieren einer zweiten Nachricht zu der ersten Basisstation, wobei die zweite Nachricht eine Einwilligung zum Ausführen der Übergabe der Kommunikation darstellt, wenn der in der ersten Nachricht umfasste temporäre Identifizierer in der Liste von temporären Identifizierern umfasst ist, oder die zweite Nachricht eine Ablehnung zum Ausführen der Übergabe der Kommunikation darstellt, wenn der in der ersten Nachricht umfasste temporäre Identifizierer nicht in einer Liste temporärer Identifizierer umfasst ist.

12. Vorrichtung zum Ermöglichen einer Bestimmung, ob eine Übergabe einer Kommunikation, bei welcher ein erstes mobiles Endgerät beteiligt ist, zwischen Basisstationen in einem Gebiet auszuführen ist, das durch eine Mobilitätsmanagementeinheit eines drahtlosen zellularen Telekommunikationsnetzes gemanagt wird, wobei die Vorrichtung in der Mobilitätsmanagementeinheit enthalten ist und folgendes aufweist:
- eine Einrichtung zum Zuteilen eines temporären Identifizierers zu dem ersten mobilen Endgerät, **gekennzeichnet durch**
- eine Einrichtung zum Erhalten einer Liste von Basisstationen, über welche eine Kommunikation des ersten mobilen Endgeräts durchzugehen autorisiert worden ist,
- eine Einrichtung zum Transferieren einer ersten Nachricht, die wenigstens den temporären Identifizierer des ersten mobilen Endgeräts umfasst, zu jeder in der Liste von Basisstationen identifizierten Basisstation.

13. Computerprogramm, das direkt ladbar in eine programmierbare Vorrichtung sein kann, mit Anweisungen oder Teilbereichen eines Codes zum Implementieren der Schritte des Verfahrens nach einem der Ansprüche 1 bis 6, wenn das Computerprogramm auf einer programmierbaren Vorrichtung ausgeführt wird.

14. Computerprogramm, das direkt ladbar in eine programmierbare Vorrichtung sein kann, mit Anweisungen oder Teilbereichen eines Codes zum Implementieren der Schritte des Verfahrens nach einem der Ansprüche 7 bis 10, wenn das Computerprogramm auf einer programmierbaren Vorrichtung ausgeführt wird.

## Revendications

1. Méthode pour déterminer si une procédure de transfert d'une communication dans laquelle un premier terminal mobile est impliqué doit être exécutée d'une première station de base à une seconde station de base d'un réseau de télécommunication cellulaire sans fil, la méthode comportant les étapes exécutées par la seconde station de base de :
- réception (S400) d'un premier message demandant de transférer la communication dans laquelle le premier terminal mobile est impliqué de la première station base à la seconde station de base, le message comportant un identifiant temporaire assigné au premier terminal mobile, **caractérisée par** les étapes de :
- vérification (S402) si l'identifiant temporaire compris dans le premier message est compris dans une liste d'identifiants temporaires de terminaux mobiles pour lesquels la procédure de transfert des communications dans lesquelles ils sont impliqués est autorisée, la liste des identifiants temporaires de terminaux mobiles pour lesquels le transfert des communications dans lesquelles ils sont impliqués est autorisé étant composée d'identifiants temporaires de terminaux mobiles pour lesquels un établissement d'appel à travers la seconde station de base a déjà été autorisé,
- transfert d'un deuxième message à la première station de base, le deuxième message étant représentatif d'un accord (S403) pour exécuter la procédure de transfert de la communication si l'identifiant temporaire compris dans le premier message est compris dans la liste d'identifiants temporaires ou le deuxième message étant représentatif d'un refus (S404) pour exécuter la procédure de transfert de la communication si l'identifiant temporaire compris dans le premier message n'est pas compris dans une liste d'identifiants temporaires.

2. Méthode selon la revendication 1, **caractérisée en ce que** la méthode comporte en outre les étapes de :
- réception (S410) d'un deuxième terminal mobile d'un troisième message demandant un établissement d'une communication avec un dispositif de télécommunication distant par l'intermédiaire de la seconde station de base, le troisième message comportant un identifiant temporaire assigné au deuxième terminal mobile,
- vérification (S411) si l'établissement de la communication est autorisé par une entité de gestion de mobilité du réseau de télécommunication cellulaire sans fil,
- insertion (S413) de l'identifiant du deuxième terminal mobile dans la liste d'identifiants temporaires des terminaux mobiles si l'établissement de la communication est autorisé.

3. Méthode selon la revendication 2, **caractérisée en ce que** la méthode comporte en outre les étapes de :
- réception (S430) de l'entité de gestion de mobilité d'un quatrième message comprenant une autre liste d'identifiants temporaires de terminaux mobiles,
- remplacement (S431) de la liste d'identifiants temporaires de terminaux mobiles par l'autre liste d'identifiants temporaires de terminaux mobiles comprise dans le quatrième message.

4. Méthode selon la revendication 2, **caractérisée en ce que** la méthode comporte en outre les étapes de :
- réception de l'entité de gestion de mobilité d'un quatrième message comprenant au moins une paire d'identifiants temporaires de terminaux mobiles,
- remplacement dans la liste d'identifiants temporaires de terminaux mobiles de chaque identifiant temporaire qui correspond au premier élément d'une paire par le second élément de la paire.

5. Méthode selon la revendication 2, **caractérisée en ce que** la méthode comporte en outre les étapes de :
- réception de l'entité de gestion de mobilité d'un quatrième message comportant au moins une commande et au moins un identifiant temporaire,
- ajout dans la liste d'identifiants temporaires des terminaux mobiles ou suppression de la liste d'identifiants temporaires des terminaux mobiles, d'au moins un identifiant temporaire compris dans le quatrième message selon la au moins une commande.

6. Méthode selon l'une quelconque des revendications 2 à 5, **caractérisée en ce que** la seconde station de base mémorise une liste d'identifiants univoques des terminaux mobiles et **en ce que** la méthode comporte en outre les étapes de :
- transfert à l'entité de gestion de mobilité d'un cinquième message comportant la liste des identifiants univoques des terminaux mobiles,
- réception en réponse au cinquième message d'un sixième message comportant une liste d'identifiants temporaires alloués aux terminaux mobiles dont les identifiants univoques sont compris dans le cinquième message.

7. Méthode pour permettre la détermination, si une procédure de transfert d'une communication dans laquelle un premier terminal mobile est impliqué doit être exécutée entre des stations de base dans un secteur contrôlé par une entité de gestion de mobilité d'un réseau de télécommunication cellulaire sans fil, la méthode comportant les étapes exécutées par l'entité de gestion de mobilité de :
- assignation (S506) d'un identifiant temporaire au premier terminal mobile, **caractérisée en ce qu'**elle comporte les étapes de :
- obtention d'une liste de stations de base par lesquelles une communication de du premier terminal mobile a été autorisée,
- transfert (S508), à chaque station de base identifiée dans la liste de stations de base d'un premier message comportant au moins l'identifiant temporaire du premier terminal mobile.

8. Méthode selon la revendication 7, **caractérisée en ce que** la méthode comporte en outre les étapes de :
- réception (S520), d'une station de base, d'un deuxième message demandant un établissement par l'intermédiaire de la station de base d'une communication du premier terminal mobile, le deuxième message comportant un identifiant temporaire assigné au premier terminal mobile,
- acceptation (S522) de l'établissement de la communication par la station de base,
- modification (S523) de la liste de stations de base par lesquelles une communication du première terminal mobile a été autorisée.

9. Méthode selon la revendication 7 ou 8 **caractérisée en ce que** l'entité de gestion de mobilité mémorise, pour chaque station de base, une liste d'identifiants univoques des terminaux mobiles pour lesquels la procédure de transfert, d'une autre station de base à la station de base, des communications dans lesquelles les terminaux mobiles sont impliqués est autorisée, et **en ce que** la méthode comporte en outre les étapes de :
- transfert d'un troisième message à la station de base lorsque la liste de identifiants univoques des terminaux mobiles est modifiée, le troisième message comportant une liste d'identifiants temporaires des terminaux mobiles pour lesquels la procédure de transfert des communications d'une autre station de base à la station de base dans laquelle ils sont impliqués est autorisée.

10. Méthode selon la revendication 9, **caractérisée en ce que** la liste de identifiants univoques des terminaux mobiles pour lesquels la procédure de transfert de communication d'une autre station de base à la station de base dans laquelle les terminal mobiles sont impliqués est autorisée est reçue de la station de base et **en ce que** chaque identifiant temporaire d'un terminal mobile dans la liste compris dans le troisième message a une position dans la liste comprise dans le troisième message qui est différente de la position de l'identifiant univoque du terminal mobile dans la liste reçue d'identifiants univoques.

11. Dispositif pour déterminer si une procédure de transfert d'une communication dans laquelle un premier terminal mobile est impliqué doit être exécutée d'une première station de base à une seconde station de base d'un réseau de télécommunication cellulaire sans fil, ledit dispositif étant inclus dans la seconde station de base et le dispositif comportant :
- des moyens pour recevoir un premier message demandant de transférer la communication dans laquelle le premier terminal mobile est impliqué de la première station base à la seconde station de base, le message comportant un identifiant temporaire assigné au premier terminal mobile, **caractérisé par** :
- des moyens pour vérifier si l'identifiant temporaire compris dans le premier message est compris dans une liste d'identifiants temporaires de terminaux mobiles pour lesquels la procédure de transfert des communications dans lesquelles ils sont impliqués est autorisée, la liste des identifiants temporaires de terminaux mobiles pour lesquels le transfert des communications dans lesquelles ils sont impliqués est autorisé étant composée d'identifiants temporaires de terminaux mobiles pour lesquels un établissement d'appel à travers la seconde station de base a déjà été autorisé,
- des moyens pour transférer un deuxième message à la première station de base, le deuxième message étant représentatif d'un accord pour exécuter la procédure de transfert de la communication si l'identifiant temporaire compris dans le premier message est compris dans la liste d'identifiants temporaires ou le deuxième message étant représentatif d'un refus pour exécuter la procédure de transfert de la communication si l'identifiant temporaire compris dans le premier message n'est pas compris dans une liste d'identifiants temporaires.

12. Dispositif pour permettre la détermination, si une procédure de transfert d'une communication dans laquelle un premier terminal mobile est impliqué doit être exécutée entre des stations de base dans un secteur contrôlé par une entité de gestion de mobilité d'un réseau de télécommunication cellulaire sans fil, ledit dispositif étant inclus dans l'entité de gestion de mobilité et comportant :
- des moyens pour assigner un identifiant temporaire au premier terminal mobile, **caractérisé en ce qu'**il comporte :
- des moyens pour obtenir une liste de stations de base par lesquelles une communication du premier terminal mobile a été autorisée,
- des moyens pour transférer, à chaque station de base identifiée dans la liste de stations de base un premier message comportant au moins l'identifiant temporaire du premier terminal mobile.

13. Programme informatique qui peut être directement chargeable dans un dispositif programmable, comportant des instructions ou des parties du code pour mettre en application les étapes de la méthode selon les revendications 1 à 6, quand le programme informatique dit est exécuté sur un dispositif programmable.

14. Programme informatique qui peut être directement chargeable dans un dispositif programmable, comportant des instructions ou des parties du code pour mettre en application les étapes de la méthode selon les revendications 7 à 10, quand le programme informatique dit est exécuté sur un dispositif programmable.
